# EUROPEAN PATENT SPECIFICATION

(11) **EP 2 112 451 B1**
(45) Date of publication and mention of the grant of the patent: **25.01.2012**
(21) Application number: 09160994.1
(22) Date of filing: 25.01.2007
(51) Int. Cl.: F28D 20/02

(54) **Thermal energy storage apparatus**
Wärmeenergiespeichervorrichtung
Appareil de stockage d'énergie thermique

(30) Priority: 26.01.2006 IL 17337306
(43) Date of publication of application: 28.10.2009
(62) Divisional of application: 07706047.3
(73) Proprietor: Nuclear Research Center-Negev, 84190 Beer-sheva (IL)
(72) Inventor: Sagie, Dan, 84750 Beer-sheva (IL); Assis, Eli, 84476 Beer-sheva (IL)
(74) Representative: Vossius & Partner

(56) References cited:
- EP-A- 1 455 155
- WO-A-02/01133
- US-A- 4 200 148

## Description

### Field of the Invention

The present invention relates to the field of thermal energy storage. More particularly, the invention relates to a phase change materials (PCM) based method and apparatus, with improved thermal conductivity for storing and delivering thermal energy.

### Background of the Invention

Thermal Energy Storage (TES) technologies provide efficient and cost effective solutions in various heat process industries (e.g., solar heat systems). Common TES technologies that are used nowadays might be classified to either sensible heat or fusion heat storage. The present invention aims to provide an efficient fusion heat storage apparatus based on a phase change material.

Phase change thermal energy storage is based on the large heat of fusion of some Phase Change Materials (PCM, e.g., paraffin waxes, inorganic salts). Typically, in this type of energy storage applications the phase of the PCM changes from solid state into liquid state during storage of thermal energy therein, and from liquid state back into solid state while delivering the stored thermal energy therefrom. Liquid to vapor phase change (e.g., steam accumulator), and vice versa, may be similarly used in such applications to store and deliver thermal energy. The addition, or extraction, of thermal energy to/from the PCM results in a change in its phase state with corresponding absorption/rejection of thermal energy.

While the following description mainly relates to PCMs which phase is changed between their solid and liquid phases it should be clear that the present invention pertains also to other types of PCMs, for example, PCMs which phase change between liquid and gaseous states (e.g., water), or between solid and gaseous states.

A preferred approach of PCM based thermal energy storage apparatus designs is to construct the apparatus from a cylindrical container comprising a PCM. The outer surface of the container is being in contact with a circulated heat exchange fluid used for storing or extracting thermal energy to/from the PCM comprised therein. During the process of extracting the thermal energy from the PCM (herein after freezing cycle) the phase of the PCM adjacent to the inner surface of the container is the first to freeze (change from liquid state into solid state), which significantly reduces the heat conductivity of the apparatus, and as a result substantially slows down the heat extraction process. Similarly, storing the thermal energy in the PCM (hereinafter melting cycle) is also substantially slow due to the low heat conductivity of the apparatus while the PCM is in its solid state.

A thermal energy storage apparatus according to the preamble of claim 1 is disclosed in document US 4 200 148.

US 6,400,896 describes a heat exchanger comprising heat energy transfer elements extending through the PCM. This heat exchanger is comprised from a container containing the PCM, and the heat energy transfer elements, are located in a lower portion of the container. Heat exchange fluid is circulated in an annular space defined between the outer surface of the container and a tube surrounding the container. The heat energy transfer elements extending through the PCM are electrical resistance heated rods or coils, or tubes through which a high temperature fluid is flowed to initiate melting of the PCM during melt cycles.

US 5,220,954 also describes a heat exchanger comprising a PCM contained in a container surrounded by a tube wherein a heat exchange fluid is circulated in the annular space defined between the outer surface of the container and the surrounding tube. The annular space is divided by at least two divider walls into upper and lower passageways to allow streaming the heat exchange fluid via the lower passageway during the melt cycle, and via the upper passageway during the freeze cycle. One embodiment of the heat exchanger comprises a central tube extending through the central region of the container and connected to the upper flow passageway, wherein heat conducting fins radically extends outwardly from the central tube.

EP 1455155 describes a PCM element comprising a casing including the PCM and an inner tube concentrically disposed in the casing for routing a cooling stream of liquid or gas therethrough. The PCM element further comprises a metal braid or fins attached to the inner tube for rapidly delivering the external heat absorbed via the outer surface of the casing to the interior of the PCM element which may be then discharged via a cooling liquid flowing in the inner tube.

Another proposed solution described in "Thermal energy storage technology industrial process heat applications", Proceedings of ISEC2005: 2005 international solar energy conference, August 6-12, 2005, Orlando, Florida, by Rainer T. et al, suggests to reduce the heat conduction resistance of PCM storage apparatuses by embedding the PCM in a matrix made of a material with high thermal conductivity.

The methods described above have not yet provided satisfactory solutions for efficiently storing thermal energy in a PCM based thermal energy storage apparatus and rapidly extracting the stored thermal energy therefrom. A cost effective method has not been introduced as well. Therefore there is a need for an improved thermal energy storage apparatus that overcomes the above mentioned problems.

It is therefore an object of the present invention to provide a PCM based method and apparatus which provides improved heat conductivity and thereby enable rapidly, high power storing and extracting of thermal energy.

It is a further object of the present invention to provide a simplified and cost effective method and apparatus for rapidly, high power storing and extracting of thermal energy.

It is another object of the present invention to provide a generic thermal energy storage unit which is suitable for a wide range of applications (e.g. Heat management (regulation) in any Process in the Heat industry).

### Summary of the Invention

It has now been found that it is possible to construct an energy storage apparatus capable of rapidly delivering thermal energy to/from a PCM contained in a heat conducting container comprising a thermal energy transfer element which provides a plurality of heat transfer paths between the central space of the heat conducting container and its inner wall. This new construction allow rapidly delivering thermal energy to/from the apparatus via a heat exchange fluid flowing in contact with the wall of the heat conducting container without requiring that the heat exchange fluid be circulated inside said energy storage apparatus.

The present invention is thus directed to a thermal energy storage apparatus for delivering thermal energy to or from a PCM according to claim 1.

The thermal energy transfer element may be attached to a central supporting member made from a heat conducting rod, tube, conduit, or wires.

The insertable thermal energy transfer element may be shaped in a form of an elongated star polygon the apex points of which are pressed against the inner wall of said heat conducting container thereby providing a plurality of heat transfer paths between the center of said container and its wall. A central supporting member may be used to support the elongated star element such that its base points are in contact with the outer surface of the supporting member. The elongated star element may comprise transfer apertures provided on its sides for allowing migration of the PCM therethrough. Similarly, transfer apertures may be also provided on the central supporting member for allowing migration of the PCM therethrough.

A method for manufacturing a thermal energy storage apparatus, comprises providing a heat conducting container, installing the thermal energy transfer element in the heat conducting container, partially or fully filling the interior of said heat conducting container with a PCM via an opening thereof, and sealing the heat conducting container by one or more caps, wherein the thermal energy transfer element is adapted to be flexibly inserted into the heat conducting container such that its heat conducting members are pressed against the inner wall of the heat conducting container.

The heat conducting members of the thermal energy transferring element are preferably attached to a central supporting member.

The thermal energy transferring element and the PCM may be inserted into the heat conducting container via an opening thereof, which is then sealed by a cap such that the internal surface of said cap contacts the tip of the central supporting member, while the other tip of said central supporting member contacts the internal surface of the opposite end of the container. Alternatively, the heat conducting container may comprise two openings, one of which is sealed by a cap before installing the thermal energy transferring element therein and filling its interior by the PCM, and wherein the other opening is sealed by another cap afterwards, such that the internal surface of said caps contacts the tips of the central supporting member.

According to yet a further preferred embodiment the invention is directed to thermal energy storage system comprising a thermally insulated vessel in which thermal energy storage apparatuses are installed, wherein the thermally insulated vessel comprises at least one inlet and at least one outlet for streaming a heat exchange fluid via the interior of the vessel such that the heat exchange fluid streamed therethrough contacts the outer surfaces of the thermal energy storage apparatuses, and wherein some or all of the thermal energy storage apparatuses comprise a thermal energy transferring element adapted to be flexibly inserted into a heat conducting vessel such that heat conducting members of said thermal energy transferring element are pressed against the inner wall of said heat conducting vessel.

The thermal energy storage apparatuses may comprise central conduits to which the thermal energy transferring elements are attached, the extremities of said central conduits protrudes outwardly from said thermal energy storage apparatuses, wherein the thermally insulated vessel further comprises two auxiliary chambers each of which being in fluid flow communication with said central conduits via their protruding extremities for streaming another heat exchange fluid therethrough.

### Brief Description of the Drawings

The present invention is illustrated by way of example in the accompanying figures, in which similar references consistently indicate similar elements:
- Figs. 1A to 1B schematically illustrates a thermal energy storage apparatus of the present invention utilizing an elongated star shaped insert;
- Fig. 2 schematically illustrates a thermal energy storage application comprising a plurality of thermal energy storage tubes;
- Fig. 3A schematically illustrates a longitudinal-section view of a thermal energy storage apparatus of the present invention having a central conduit;
- Fig. 3B schematically illustrates a thermal energy storage application having two different flow paths for heat exchange fluids; and
- Fig. 4 graphically illustrates the results of the computerized simulation described in Example 3.

### Detailed Description of Preferred Embodiments

The present invention provides a PCM based thermal energy storage apparatus (also referred to as energy storage tube) in which the thermal energy transfer is substantially improved by increasing the apparatus heat conductivity, thereby providing relatively fast and efficient thermal energy storage and release times. As will be described in details hereinbelow the thermal energy storage apparatus of the present invention is relatively simple and easy to construct and its manufacture costs are relatively low.

In general, the thermal energy storage apparatus of the present invention is comprised of a heat conducting container (e.g., tube) comprising a PCM and an inserted thermal energy transfer element, wherein said thermal energy transfer element passes in the inner space of the heat conducting container and in thermal contact with its inner wall. In this way a plurality of heat conducting paths are obtained between the central space of the container and its inner wall, which substantially improve the heat conductivity of the apparatus. The central member is preferably manufactured from heat conducting material(s) in form of a rod, hollow tube, conduit, or braid of wires. The PCM is preferably a type of inorganic salt such as NaNO₃.

Due to this unique structure of the thermal energy storage apparatus of the invention the thermal energy stored in the PCM in a central space thereof can be efficiently delivered to a heat exchange fluid via the insert provided therein and via its walls. More particularly, the plurality of heat conducting paths, obtained by the heat conducting members of the insert between the central space of the heat conducting container and its wall, maintain good heat conductivity despite the rapid solidification of the PCM at the periphery near the walls of the container. Consequently, the stored thermal energy is rapidly delivered and thereby the freezing cycles are substantially shortened and the melting cycles are accelerated.

The heat conducting insert is implemented in the shape of an elongated star polygon.

The structure of the thermal energy storage apparatus of the present invention is simple and therefore its construction is relatively easy as well. An elongated tube, having at least one opening, is preferably used as a heat conducting container in which the heat conducting insert of the invention is installed such that its heat conducting elements are pressed against its inner wall. The heat conducting insert of the invention is preferably pushed into the tube via an opening thereof, after which the tube is filled with the PCM and its opening(s) are sealed.

The thermal energy storage apparatus of the invention may be used in the typical tubes and shell concept of structure, wherein a plurality of thermal energy storage tubes are arranged in parallel in a shell through which a heat exchange fluid is routed in contact with the outer surface of the storage apparatuses.

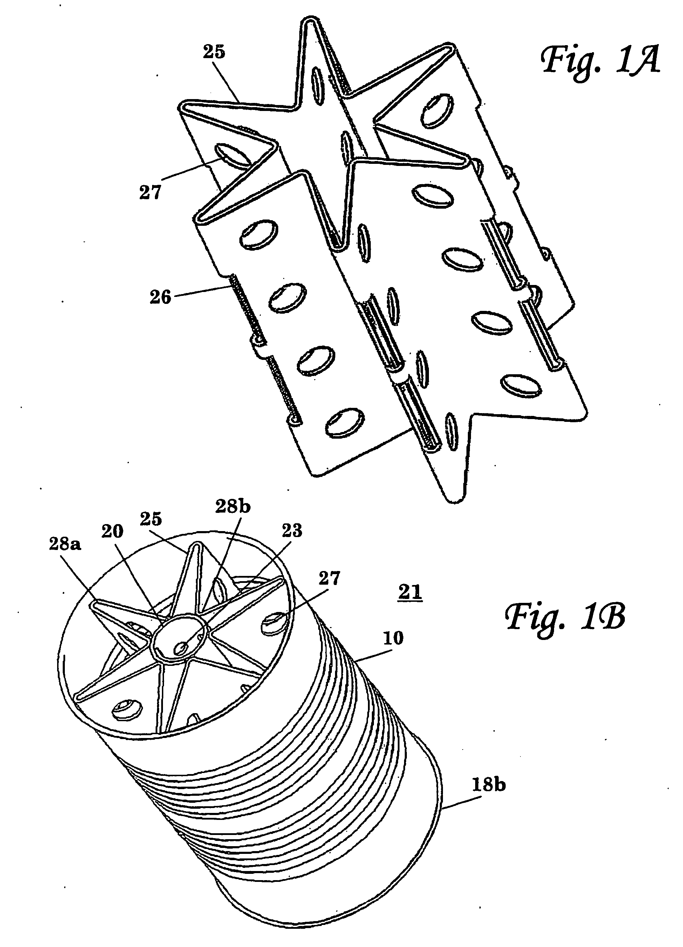

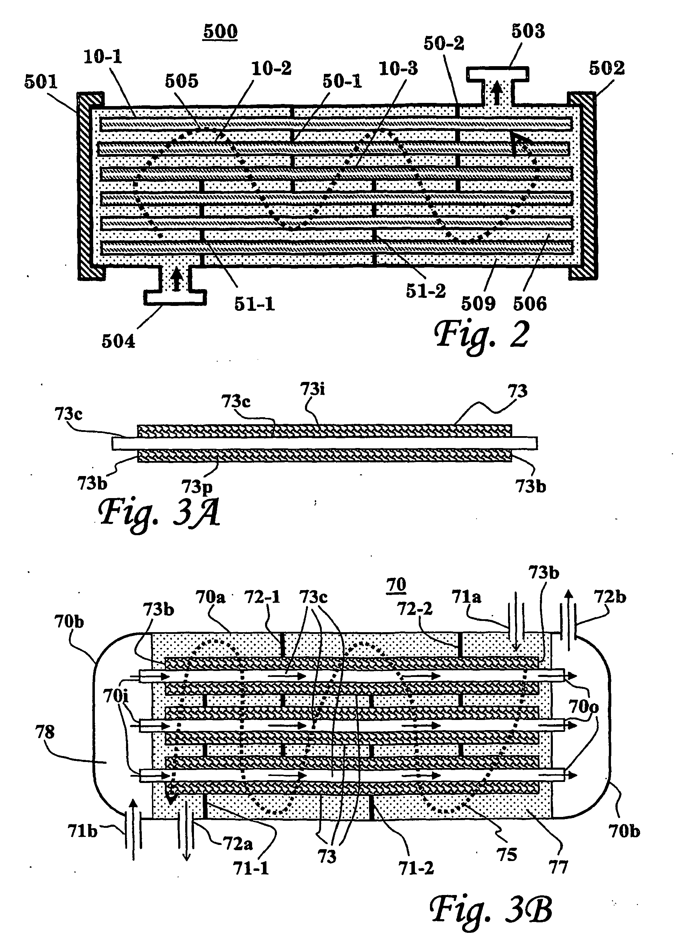

Figs. 1A to 1B illustrate the thermal energy transfer element used in a thermal energy storage apparatus 21 of the present invention. The heat conducting insert **25** is formed in a shape of an elongated star polygon (hereinafter referred to as star insert) having a cross-sectional star polygon shape and a hollow interior which may be accessed via its end openings. Star insert **25** further comprise transfer apertures **27** communicating between its inner and external surrounding space. Transfer apertures **27** provided on the sides of star insert **25** allow PCM **14** (not shown in Figs. 2A and 2B) to migrate in the inner space of thermal energy storage apparatus **21.**

Star insert **25** is preferably made from a heat conducting material, such as Copper, preferably from Aluminum. The number of points (apexes) in the star polygon shape of star insert **25** may be selected according to the specific implementation. In a preferred embodiment of the invention star shape insert **25** is formed as a six point star (having hexagram cross-sectional geometry) from a flat metal sheet comprising transfer apertures **27,** and which may further comprise bending slits **26** for facilitating the bending of the metal sheet into the requisite elongated star polygon shape. The thickness of the metal sheet is generally in the range of 0.5 to 4 mm, preferably about 1 mm.

After inserting star insert **25** into tube **10** its apex points **28a** may be firmly pressed against the inner wall of tube **10** by inserting an elongated forcing element **20** into its center. In this way portions of the outer surface of forcing element **20** are pressed against base points **28b** of star insert **25** thereby applying a radial force thereon and radially pressing apex points **28a.** Forcing element **20** may be constructed from any suitable material (e.g., heat conducting and/or resilient), as known in the art. It is preferably made from a heat conducting sheet, such as copper, preferably from aluminum, rolled into a form of an elongated tube having radial resiliency about its longitudinal axis for applying radial forces on points **28a** and **28b,** thereby pressing apex points **28a** against the inner wall of tube **10.** Transfer apertures **23** may be provided at different locations along the forcing element **20** to allow migration of PCM therethrough.

Fig. 2 illustrates a preferred tubes and shell implementation utilizing thermal heat storage apparatuses, **10-1, 10-2, 10-3,** ..., of the present invention. In this implementation a plurality of thermal heat storage apparatuses (e.g., tubes), **10-1, 10-2, 10-3,... ,** are placed in parallel inside thermally insulated vessel **500,** along its length. Vessel **500** may be constructed from a cylindrical hollow medium sealed by end caps **501** and **502** attached to end openings. While in this example vessel **500** is horizontally positioned such that its longitudinal axis is parallel to the ground surface, it should be noted that it may be similarly positioned vertically, namely - such that its longitudinal axis is perpendicular to the ground surface.

Heat exchange fluid inlet **504** is preferably provided at the lower lateral side of vessel **500,** near one end thereof (e.g., **501),** and a heat exchange fluid outlet **503** is preferably provided at the upper lateral side of vessel **500,** near its other end (e.g., **502).** Of course, the heat exchange fluid may flow in the other direction. Thermal heat storage apparatuses **10-1, 10-2,...,** are fastened inside vessel **500** via a set of tube supporting partitions **50** and **51.**

The upper tube supporting partitions **50-1, 50-2,...,** extends downwardly from the inner top sections of vessel **500,** and lower tube supporting partitions **51-1, 52-2,...,** extends upwardly from the inner bottom sections of vessel **500.** Upper and lower tubes supporting partitions **50** and **51** are placed in intertwining form, thereby forcing a flow path (indicated by arrow **505)** of heat exchange fluid **509** the direction of which alternates inside vessel **500,** namely - the flow direction is zigzagged between up and down flow directions. In this way the heat exchange between thermal storage apparatuses **10-1, 10-2,...,** and the heat transfer fluid is maximized.

Vessel 500 may be fabricated from a ferrous material, such as steel, preferably from carbon steel. As will be understood by those skilled in the art the range of the geometrical dimensions of vessel **500** should be adjusted according to the requirements of each specific application. Accordingly, the design of vessel **500** should consider the number of thermal storage apparatuses that vessel **500** should comprise and the desirable length of said apparatuses. In this way thermal storage apparatuses may be horizontally installed therein via upper and lower tubes supporting partitions **50** and **51** such that a minimal gap is obtained between their ends and the inner surface of end caps **501** and **502.**

End caps **501** and **502** may be fabricated from any suitable material. For example, caps **501** and **502** may be fabricated from the same material from which vessel **500** is made. Caps **501** and **502** are adjusted to fit over the outer surfaces of end section of vessel **500** and seal its end openings. Upper and lower tubes supporting partitions **50** and **51** may be fabricated from a type of steel, preferably from carbon steel, and they are designed to block about 90% of the cross section area of vessel **500.** Heat exchange fluid **506** may comprise thermal oil, in a preferred embodiment of the invention it comprises Therminol VP1 of Solutia (St. Louis, USA) or Syltherm 800 of Dow Chemicals, and its flow rate inside vessel **500** is selected to maintain optimal heat transfer.

The flow rate of heat transfer fluid **509** during the melting cycle may generally be in the range of 20 to 100 m³/Hr for a 1MWₜₕh storage unit (thermal megawatt-hour), and during the freezing cycle in the range of 40 to 200 m³/Hr for said unit.

Fig. 3A schematically illustrates a longitudinal-section view of a thermal energy storage apparatus **73** of the present invention having a central conduit **73c** passing longitudinally along its length in thermal contact with the heat conducting insert **73i** contained therein. As shown in Fig. 3A, the interior of thermal energy storage apparatus **73** is filled with a PCM **73p,** and the ends of central conduit **73c** protrudes outwardly from the bases **73b** of thermal energy storage apparatus **73.**

Most preferably, internal conduit **73c** is used as a central support element of the heat conducting insert such that it passes coaxially along the length of the thermal energy storage apparatuses **73c** having the heat conducting elements of said heat conducting insert attached to its external surface. Internal conduit **73c** is preferably used as a central member of heat conducting insert **73i,** for example, internal conduit 73c may be used as forcing element **20** of star insert **25** (shown in Fig. 2B)

Fig. 3B schematically illustrates a thermal energy storage implementation comprising a vessel **70** and thermal energy storage apparatuses **73,** said vessel **70** and thermal energy storage apparatuses **73** are configured such that two different flow paths for heat exchange fluids are formed. In this embodiment of the invention the thermal energy storage apparatuses **73** comprise an internal conduit **73c,** as described hereinabove with reference to Fig. 3A. As shown in Fig. 3B, the extremities of internal conduits **73c** protrudes outwardly from the bases **73b** of thermal energy storage apparatuses 73 such that their interiors are accessible via opening **70i** and **70o** thereof.

Vessel **70** comprises a main chamber **70a** in which thermal energy storage apparatuses **73** are installed, and two auxiliary chambers **70b.** Energy storage apparatuses **73** are installed in the main chamber **70a** such that portions of the extremities of internal conduits **73c** are introduced into auxiliary chambers **70b** thereby providing fluid flow communication between the interiors of said auxiliary chambers **70b** and of said internal conduits **73c.**

Main chamber **70a** comprises a fluid inlet **71a** and a fluid outlet **72a** through which a first heat transfer fluid **77** may be streamed. Fluid inlet **71a** and fluid outlet **72a** are preferably provided on opposing lateral sides of main chamber **70a** at longitudinally distant locations. For example, as exemplified in Fig. 3B, fluid inlet **71a** is provided near one end of main chamber **70a** while fluid outlet **72a** is provided at the opposing lateral side near the other end of main chamber **70a.**

Each of the auxiliary chambers **70b** comprises at least one fluid port for streaming a second heat transfer fluid **78** therebetween via internal conduits **73c** of energy storage apparatuses **73.** As shown in Fig. 3B, a first fluid port **71b** provided in one auxiliary chamber **70b** may be used as inlet, while another fluid port **72b,** which may be located on an opposing lateral side of vessel **70,** in the other auxiliary chamber **70b,** may used as an outlet of said second heat exchange fluid.

Vessel **70** preferably comprises upper partitions **72-1, 72-2,...,** extending downwardly from the inner top sections of main chamber **70a,** and lower partitions **71-1, 71-2,...,** extending upwardly from the inner bottom sections of main chamber **70a.** Upper and lower partitions **71** and **72** are placed in intertwining form, thereby forcing a flow path (designated by arrow **75)** of a first heat transfer fluid **77** the direction of which alternates inside main chamber **70a,** namely - the flow direction is zigzagged between up and down flow directions.

Vessel **70** may be made from a ferrous material, such as steel, preferably from carbon steel. The volume of main chamber **70a** may generally be of about 13,000 liters for a 1 MWₜₕh unit, and the volume of each of the auxiliary chambers **70b** may generally be in the range of 800 to 2000 liters.

Internal conduits **73c** may be made from a metallic material, such as Aluminum or copper, preferably from carbon steal. The inner diameter of internal conduits **73c** may generally be of about 30mm for a 1MWₜₕh unit, and their lengths may generally be in the range of 3 to 6 meters for that unit.

The first heat exchange fluid passed via main chamber **70a** is preferably used for transferring thermal energy to the energy storage apparatuses **73** contained therein, and it may be implemented by water (or steams) or by type of oil, preferably by a heat transfer oil, such as, but not limited to, Therminol VP1 of Solutia.

The second heat exchange fluid passed via auxiliary chambers **70b** is preferably used for removing thermal energy from the energy storage apparatuses **73** contained therein, and it may be implemented by water (or steams) or by type of oil, preferably by water steams.

It should be noted that the thermal energy storage of the apparatus of the present invention is suitable for a wide range of thermal energy storage applications. The same energy storage tubes may be used in various ranges of powers/energies, and they may be adjusted to operate in different temperatures simply by choosing a suitable PCM. The present invention therefore provides a generic solution for thermal heat storage applications, which may be easily adjusted to suit the specific requirements.

All of the abovementioned parameters are given by way of example only, and may be changed in accordance with the differing requirements of the various embodiments of the present invention. Thus, the abovementioned parameters should not be construed as limiting the scope of the present invention in any way. In addition, it is to be appreciated that the different tubes, containers, and other members, described hereinabove may be constructed in different shapes (e.g. having oval, square etc. form in plain view) and sizes from those exemplified in the preceding description.

### Example 1

Table 1 lists the results obtained in a set of simulating experiments which were performed using a small test model. These experiments were carried out using a thermal energy storage apparatus constructed from a cylindrical tube having a diameter of 100 mm, made from steel in a thickness of 1 mm. The cylindrical tube was filled with a NaNO₃/KNO₃ mixture having 250 °C fusion temperature, and it was tested without thermal energy transferring insert and with the various insert types demonstrated hereinabove. The thermal energy storage apparatus was installed in a container through which PazTherm22 heat transfer fluid was circulated. During the melting cycle the temperature of the heat transfer fluid was 260 °C which heated the PCM to about 250 °C, and it was cooled to 240 °C for releasing the stored thermal energy in the freezing cycle.

**TABLE 1:**

| **Insert type** | **Duration of stored energy extraction[min]** |
|---|---|
| No insert | 128 |
| Elongated star insert | 40 |

The time required for complete extraction of the stored energy is presented in table 1 for the same tube without inserts, and with inserts of several designs. As shown in table 1 there were significant improvements in the performance of the energy storage apparatus when tested with a thermal energy transferring insert. These experimental results show that the time duration required for the storage tube to deliver its energy is substantially shortened (to about 1/3 tripling the power) when the thermal energy transferring insert was used.

### Example 2

The following demonstration is a specific example for a thermal energy storage system of the invention that is designed to operate in 307°C using NaNO₃ as a PCM and VP1 as heat transfer fluid. This system is designed for storing about 1 MWₜₕh within 4 hours (i.e., power of 250 kWₜₕ) and for delivering the same in about 2 hours (i.e., power of 500kWₜₕ)

In this example the thermal energy storage apparatus is implemented utilizing an elongated heat conducting tube containing the PCM and an elongated aluminum star insert. The elongated star insert consists of six apex points and it is of the same length as the heat conducting tube.

Table 2 provides geometric parameters of the exemplified thermal energy storage apparatus:

**TABLE 2:**

| **Parameter** | **Size/Quantity** | **Notes** |
|---|---|---|
| Tube inner diameter | 10cm | |
| Tube length | 400cm | made of Carbide Steel |
| Tube volume | 31.416 liter | |
| Number of tubes | 310 | |
| Total volume | 9739 liter | |
| Latent heat per liter | 0.116 kWₜₕh/liter | |
| Fill coefficient-PCM filling factor | 0.9 | |
| Total energy storage | 1016.7 kWₜₕh | for 100% efficiency |
| Tubes fill coefficient - Volume of tubes to vessel volume ratio | 0.79 | |
| Thickness of tube wall | 0.15cm | |
| Vessel's inner diameter | 204cm | |
| Vessel's volume | 13074 liter | |
| Volume of energy storage tubes | 10332.1 liter | |
| Volume of heat transfer fluid | 2742 liter | |
| Heat transfer fluid to PCM volume ratio | 28.2% | |
| PCM weight | 22010Kg | density of about 2.6 at fusion temperature |
| Sensible heat in heat transfer fluid | 14.38 kWₜₕh/10°C | THERMINOL VP-1 |
| Heat transfer fluid flow rate required for transferring the heat in 2 Hours | 26.93 liter/sec | |

| | | |
|---|---|---|
| (kWₜₕh - thermal kilowatt-hour) | | |

### Example 3

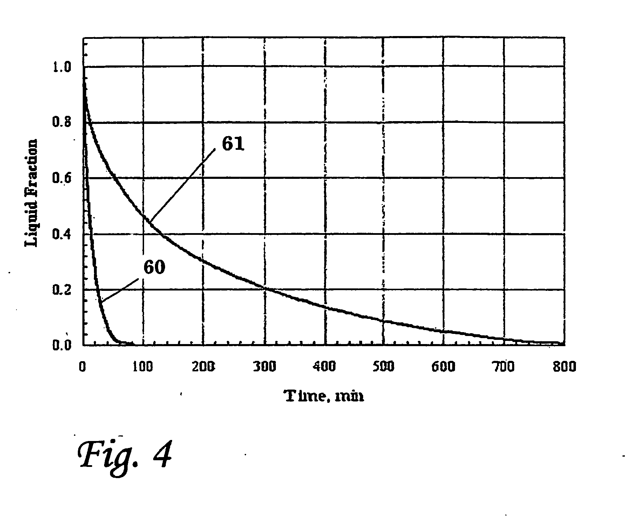

Fig. 4 graphically illustrates the results obtained in a computerized simulation in which the heat transfer of the thermal energy storage apparatus of the invention was tested, and wherein the configuration of the simulated heat transfer apparatus was as follows: the heat conducting tube of the apparatus is a steel tube having a 100 mm inner diameter and comprising an elongated star insert made of pure Aluminum (e.g., Aluminum 1100) having 6 apex points and 1 mm thickness. In the simulation SylTherm800 oil was used as a heat transfer fluid and the temperature difference between the heat transfer fluid and the melted PCM salt (NaNO₃) was 10°C.

Fig. 4 shows the results of the computerized simulation, wherein the curves shown illustrates the rate of solidification over time which represents the power extracted from the tube assembly. Curve 60 illustrates the results obtained in a simulation of the heat transfer apparatus containing the elongated star insert, and curve 61 illustrates the results obtained in a simulation in which the heat transfer apparatus of the invention contained only the PCM salt (without heat transfer insert). The vertical axis of the graph in Fig. 4 relates to the changes of the PCM state between its liquid (1.0) and solid (0.0) states.

## Claims

1. A thermal energy storage apparatus for delivering thermal energy to or from a PCM, comprising an elongated heat conducting container (10) having an insertable thermal energy transfer element (25) placed therein, **characterized in that** said thermal energy transfer element is shaped in a form of an elongated star polygon having a cross-sectional star polygon shape and a hollow interior, the apex points (28a) of said star which are pressed against the inner wall of said heat conducting container thereby providing a plurality of heat transfer paths between the center of said container and its wall.

2. The thermal energy storage apparatus of claim 1, further comprising a central supporting member (20), wherein the base points (28b) of the elongated star are in contact therewith.

3. The thermal energy storage apparatus of claim 1 or 2, further comprising transfer apertures (27) provided on the sides of the elongated star insert, and/or (23) on the central supporting member (20), for allowing migration of the PCM therethrough.

4. The thermal energy storage apparatus according to claim 1 or 2, wherein the central supporting member (20) is made from a thermally conducting conduit suitable for streaming a heat exchange fluid therethrough.

5. A thermal energy storage system for delivering thermal energy to or from a PCM comprising a thermally insulated vessel (500) in which thermal energy storage apparatuses (10-1, 10-2,...) are installed, wherein said thermally insulated vessel comprises at least one inlet (504) and at least one outlet (503) for streaming a heat exchange fluid (509) via the interior of said vessel such that the heat exchange fluid streamed therethrough contacts the outer surfaces of said thermal energy storage apparatuses, and wherein some or all of said thermal energy storage apparatuses are according to claim 1.

6. A thermal energy storage system according to claim 5, wherein the thermal energy storage apparatuses (73) comprise central conduits (73c) to which the thermal energy transferring elements are attached, the extremities of said central conduits protrudes outwardly from said thermal energy storage apparatuses, and wherein the thermally insulated vessel further comprises two auxiliary chambers (70b) each of which being in fluid flow communication with said central conduits via their protruding extremities for streaming another heat exchange fluid (78) therethrough.

## Patentansprüche

1. Wärmeenergiespeichervorrichtung zur Abgabe von Wärmeenergie an oder aus einem Latentwärmespeichermaterial, die einen länglichen wärmeleitenden Behälter (10) mit einem einsetzbaren Wärmeenergieübertragungselement (25), das darin angeordnet ist, **dadurch gekennzeichnet, dass** das Wärmeenergieübertragungselement in einer Form eines länglichen Sternpolygons geformt ist, das eine Querschnittssternpolygonform und ein hohles Inneres aufweist, wodurch die Scheitelpunkte (28a) des Sterns, die gegen die Innenwand des wärmeleitenden Behälters gepresst werden, mehrere Wärmeübertragungswege zwischen dem Zentrum des Behälters und seiner Wand bereitstellen.

2. Wärmeenergiespeichervorrichtung nach Anspruch 1, das ferner ein zentrales Halteelement (20) aufweist, wobei die Basispunkte (28b) des länglichen Sterns in Kontakt damit stehen.

3. Wärmeenergiespeichervorrichtung nach Anspruch 1 oder 2, die ferner Übertragungsöffnungen (27) aufweist, die an den Seiten des länglichen Sterneinsatzes und/oder (23) am zentralen Halteelement (20) vorgesehen sind, um eine Wanderung des Latentwärmespeichermaterials dort hindurch zu ermöglichen.

4. Wärmeenergiespeichervorrichtung nach Anspruch 1 oder 2, wobei das zentrale Halteelement (20) aus einem wärmeleitenden Kanal besteht, der geeignet ist, eine Wärmetauschflüssigkeit dort hindurch strömen zu lassen.

5. Wärmeenergiespeichersystem zur Abgabe von Wärmeenergie an oder aus einem Latentwärmespeichermaterial, das einen wärmegedämmten Kessel (500) aufweist, in dem Wärmeenergiespeichervorrichtungen (10-1, 10-2,...) eingebaut sind, wobei der wärmegedämmte Kessel mindestens einen Einlass (504) und mindestens einen Auslass (503) aufweist, um eine Wärmetauschflüssigkeit (509) über das Innere des Kessels strömen zu lassen, so dass die dort hindurch strömende Wärmetauschflüssigkeit die Außenseiten der Wärmeenergiespeichervorrichtungen berührt, und wobei einige oder alle Wärmeenergiespeichervorrichtungen nach Anspruch 1 gestaltet sind.

6. Wärmeenergiespeichersystem nach Anspruch 5, wobei die Wärmeenergiespeichervorrichtungen (73) zentrale Kanäle (73c) aufweisen, an denen die Wärmeenergieübertragungselemente angebracht sind, die Endpunkte der zentralen Kanäle aus den Wärmeenergiespeichervorrichtungen nach außen vorstehen, und wobei der wärmegedämmte Kessel ferner zwei Hilfskammern (70b) aufweist, von denen jede über ihre vorstehenden Endpunkte in Flüssigkeitsfließverbindung mit den zentralen Kanälen stehen, um eine andere Wärmetauschflüssigkeit (78) dort hindurch strömen zu lassen.

## Revendications

1. Appareil de stockage d'énergie thermique destiné à délivrer de l'énergie thermique à un matériau à changement de phase ou de l'énergie thermique provenant de ce dernier, comprenant un conteneur thermoconducteur oblong (10) avec un élément insérable de transfert d'énergie thermique (25) disposé à l'intérieur de celui-ci, **caractérisé en ce que** l'élément de transfert d'énergie thermique se présente sous la forme d'un polygone en étoile oblongue avec une section transversale polygonale en étoile et un intérieur creux, les points des sommets (28a) de l'étoile serrés contre la paroi intérieure du conteneur thermoconducteur réalisant une pluralité de passages de transfert de chaleur entre le centre et la paroi du conteneur.

2. Appareil de stockage d'énergie thermique selon la revendication 1, comprenant en outre un organe central de support (20), au contact duquel se trouvent les points de bases (28b) de l'étoile oblongue.

3. Appareil de stockage d'énergie thermique selon la revendication 1 ou la revendication 2, comprenant en outre des ouvertures de transfert (27) prévues sur les côtés de l'insert en étoile oblongue, et/ou (23) sur l'organe central de support (20), permettant le passage du matériau à changement de phase.

4. Appareil de stockage d'énergie thermique selon la revendication 1 ou la revendication 2, où l'organe central de support (20) consiste en un conduit thermoconducteur permettant l'écoulement d'un fluide échangeur de chaleur.

5. Système de stockage d'énergie thermique destiné à délivrer de l'énergie thermique à un matériau à changement de phase ou de l'énergie thermique provenant de ce dernier, comprenant un réservoir thermiquement isolé (500) où sont montés des appareils de stockage d'énergie thermique (10-1, 10-2,...), où le réservoir thermiquement isolé comprend au moins une entrée (504) et au moins une sortie (503) pour l'écoulement d'un fluide échangeur de chaleur (509) à l'intérieur du réservoir, de telle manière que le fluide échangeur de chaleur qui s'écoule dans celui-ci entre au contact des surfaces extérieures des appareils de stockage d'énergie thermique, et où certains des appareils de stockage d'énergie thermique, ou la totalité de ceux-ci sont réalisés selon la revendication 1.

6. Système de stockage d'énergie thermique selon la revendication 5, où les appareils de stockage d'énergie thermique (73) comprennent des conduits centraux (73c) auxquels sont fixés les éléments de transfert d'énergie thermique, les extrémités des conduits centraux dépassant extérieurement des appareils de stockage d'énergie thermique, et où le réservoir thermiquement isolé comprend en outre deux compartiments auxiliaires (70b), chacun de ceux-ci étant en communication d'écoulement fluidique avec les conduits centraux par leurs extrémités dépassantes, pour l'écoulement d'un autre fluide échangeur de chaleur (78) dans ceux-ci.
